# EUROPEAN PATENT APPLICATION

(11) **EP 3 644 651 A1**
(43) Date of publication of application: **29.04.2020**
(21) Application number: 18868062.3
(22) Date of filing: 19.06.2018
(51) Int. Cl.: H04W 36/14, H04W 36/12, H04W 92/24

(54) **COMMUNICATION SYSTEM, COMMUNICATION CONTROL DEVICE, AND COMMUNICATION METHOD**

(30) Priority: 16.10.2017 JP 2017200315
(71) Applicant: NTT DOCOMO, INC., Chiyoda-ku Tokyo 100-6150 (JP)
(72) Inventor: SHIMOJOU, Takuya, Tokyo 100-6150 (JP); SAMA, Malla Reddy, 80687 Munich (DE); THAKOLSRI, Srisakul, 80687 Munich (DE)
(74) Representative: Hoffmann Eitle
(86) International application number: PCT/JP2018/023333
(87) International publication number: WO 2019/077801

(57) **Abstract**

It is desirable to enable a UE to be seamlessly accessible to a corresponding slice in a different network.

In an AMF 100, when an instruction to switch a mobile communication network with which a UE 10 has a communication connection is received, a communication control unit 101 searches for another communication control device arranged in another mobile communication network. For example, in an MME 100a, a communication control unit 101a searches for the AMF 100 when the UE 10 moves from a 5G mobile communication network to a 4G mobile communication network. The search may be a search by a DNS or may be any other search. The communication control unit 101a takes over communication control information for communication connection control with another communication control device. For example, when the UE 10 moves from the 5G mobile communication network to the 4G mobile communication network, the MME 100a acquires the communication control information from the AMF 100. The communication control information includes information such as a DNC-ID and connection destination information.

## Description

### Technical Field

The present invention relates to a communication system, a communication control device, and a communication method for performing communication via a slice which is a virtual network.

### Background Art

A technique of causing a user equipment (UE) to be connected to a slice specified by network slice selection assistance information (NSSAI) in a 5G (5th generation: a fifth generation mobile communication system) network system (5GS) including a plurality of slices is disclosed in Non Patent Literature 1 described below.

A technique of causing a UE to be connected to a slice specified by dedicated core network ID (DCN ID) in a 4G (4th generation: a fourth generation mobile communication system) network (4G eDecor) including a plurality of slices is disclosed in Non Patent Literature 2 described below.

### Citation List

### Non Patent Literature

Non Patent Literature 1: 3GPP TS 23.501 V0.3.1 (2017-03)
Non Patent Literature 2: 3GPP TS 23.401 V14.3.0 (2017-03)

### Summary of Invention

### Technical Problem

Compatibility is not guaranteed between a 5GS and an eDecor. Therefore, for example, a UE accessing a slice included in a 5GS is unable to access a corresponding slice included in an eDecor. In other words, a UE is unable to access a corresponding slice in a different network.

For this reason, various strategies are considered to access a slice in a different network, and sharing an ID specifying a corresponding slice in a different network or the like is considered.

However, a mobile terminal is unable to seamlessly continue a communication connection to slice.

In this regard, the present invention was made in light of the foregoing, and it is an object of the present invention to provide a communication system, a communication control device, and a communication method which are capable of causing a mobile terminal to seamless access to a corresponding slice in a different network.

### Solution to Problem

In order to solve the above problem, a communication system according to one aspect of the present invention is a communication system in which communication control is performed for a slice which is a virtual network accessible by a mobile terminal from any of a plurality of mobile communication networks with different communication schemes, and includes a communication control device arranged to perform communication connection control for the slice in each of the plurality of mobile communication networks, in which the communication control device arranged in one mobile communication network among the plurality of mobile communication networks includes a search unit that searches for another communication control device arranged in another mobile communication network if an instruction to switch the mobile communication network with which the mobile terminal has a communication connection is received and a communication unit that takes over communication control information for the communication connection control with the other communication control device.

According to the invention, even when the mobile terminal switches the mobile communication network and moves, the communication control device can search for another communication control device in another mobile communication network and seamlessly switch the mobile communication network. Therefore, it is possible to continue a slice connection smoothly.

### Advantageous Effects of Invention

According to the present invention, the mobile terminal can continue the communication connection to the slice seamlessly.

### Brief Description of Drawings

FIG. 1 is a diagram illustrating a system configuration of a communication system of the present embodiment.
FIG. 2 is a block diagram illustrating a functional configuration of an AMF 100.
FIG. 3 is a diagram illustrating specific information described in a correspondence table.
FIG. 4 is a block diagram illustrating a functional configuration of an MME 100a.
FIG. 5 is a diagram illustrating a management table in each node.
FIG. 6 is a diagram illustrating a processing sequence when location registration to a 5G-RAN 50 is performed.
FIG. 7 is a sequence diagram for performing a seamless switching process when a UE 10 moves from a 5G mobile communication network to a 4G mobile communication network.
FIG. 8 is a sequence diagram illustrating a process when a UE 10 moves from a 4G mobile communication network to a 5G mobile communication network again.
FIG. 9 is a sequence diagram illustrating a switching process when switching from a 5G mobile communication network to a 4G mobile communication network is performed in a connected mode.
FIG. 10 is a sequence diagram illustrating a switching process when switching from a 4G mobile communication network to a 5G mobile communication network is performed in a connected mode.
FIG. 11 is a sequence diagram when location registration to a 4G mobile communication network is performed.
FIG. 12 is a sequence diagram when it moved from a 4G mobile communication network to a 5G mobile communication network.
FIG. 13 is a sequence diagram when it returns to a 4G mobile communication network.
FIG. 14 is a hardware configuration diagram of each of an AMF 100 and an MME 100a.

### Description of Embodiments

An exemplary embodiment of the present invention will be described with reference to the appended drawings. Wherever possible, the same parts are denoted by the same reference numerals, and redundant explanations will be omitted.

### [System configuration]

A communication system of the present embodiment includes a fifth generation (5G) mobile communication system and a fourth generation (4G) mobile communication system. The 5G mobile communication system includes a 5G-RAN 50, an access and mobility management function (AMF) 100, a user plane function (UPF) 300, a session management function (SMF) 400, a policy control function (PCF) 500, and a unified data management (UDM) 600. The 4G mobile communication system includes a 4G-RAN 50a, a mobility management entity (MME) 100a, a serving gateway (SGW) 200, a packet data network (PDN) gateway-user (PGW-U) 300, a packet data network (PDN) gateway-control (PGW-C) 400, a policy and charging rule function (PCRF) 500, and a home subscriber server (HSS) 600.

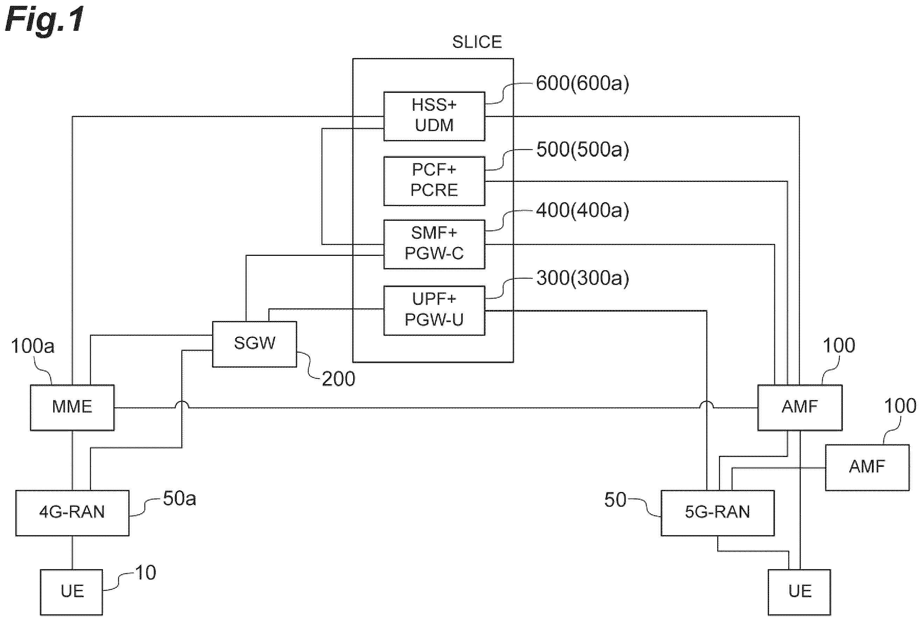

In FIG. 1, as components constituting a slice, the UPF 300, the SMF 400, the PCF 500, and the UDM 600 and the MME 100a, the SGW 200, the PGW-U 300, the PGW-C 400, the PCRF 500, and the HSS 600 are indicated by the same nodes. In the present embodiment, the slice is a virtual network virtually constructed on a network infrastructure.

In FIG. 1, the 5G-RAN (5 Generation Radio Access Network) is a network which a UE 50 is configured to be accessible with a 5G communication scheme. The AMF 100 is a communication control device that performs mobility control, and carries out communication control for causing the UE 50 to perform communication with a communication connection destination via a core network (a PGW or the like).

The PGW-U 300 is a node for communicating user data, and the PGW-C 400 is a node for communicating control data. The PCF 500 is a node that controls a communication policy. The UDM 600 is a node that performs user management.

The 4G-RAN 50a is a network which is configured to be accessible with a 4G communication scheme, and includes an eNodeB which is a base station. The UPF-U 300a is a node for communicating user data, and the SMF 400a is a node for communicating control data. The PCRF 500a is a node that controls a communication policy. The HSS 600a is a node that performs user management.

In such a communication system, when the UE 10 moves between the mobile communication network according to the 4G communication scheme and the mobile communication network according to the 5G communication scheme, the AMF 100 and the MME 100a exchange communication control information and identification information specifying a slice. Accordingly, it is possible to seamlessly perform switching of communication within a core network.

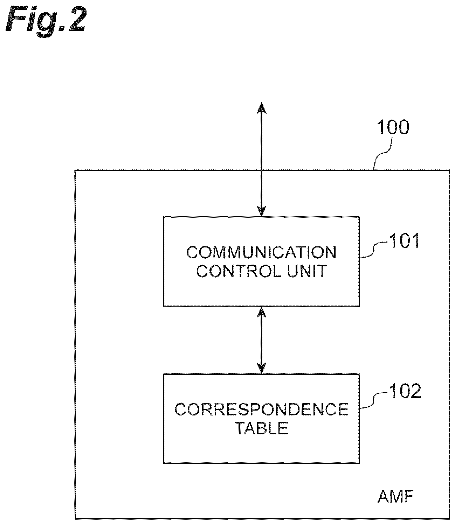

A specific process will be described below. FIG. 2 is a block diagram illustrating a functional configuration of the AMF 100. As illustrated in FIG. 2, the AMF 100 includes a communication control unit 101 (a search unit, first to third search units, a communication unit, and first to third communication units) and a correspondence table 102.

The communication control unit 101 performs communication control with another AMF 100, a search process by a DNS, and exchange of communication control information with the MME 100a.

The correspondence table 102 stores an EPS-GUTI, a 5G-GUTI, an S-NSSAI, a DCN-ID, a UE Usage Type, and an APN/DNN in association with each other. Further, the correspondence table 102 stores connection destination information that the AMF 100 performs the communication control for the UE 50 of the 5G mobile communication network. The connection destination information is an APN, an IP address, or the like indicating the connection destination of the UE 50.

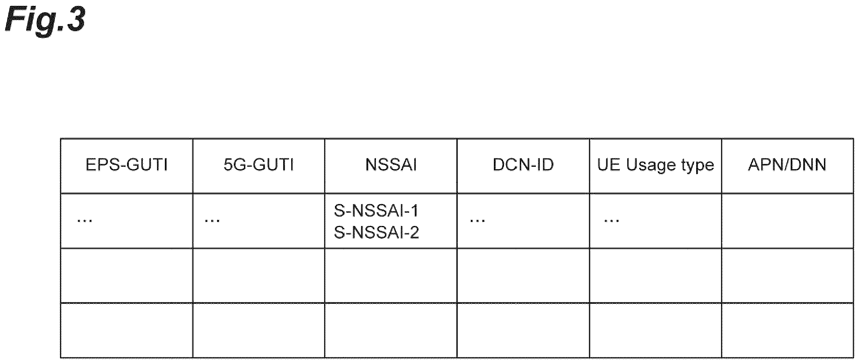

FIG. 3 illustrates a specific example of the correspondence table 102. In FIG. 3, the S-NSSAI is information stored in advance and is identification information specifying a slice. The 5G-GUTI is generated in accordance with a policy described in 3GPP TS 23.501 and is identification information temporarily identifying the UE 10 in the 5G mobile communication network. The ESP-GUTI is also identification information temporarily identifying the UE 10 in the 4Gm mobile communication network, similarly to the 5G-GUTI. The AMF 100 generates the 5G-GUTI, and the MME 100a generates the EPS-GUTI. In the AMF 100, the EPS-GUTI transmitted from another node is sequentially stored in association with the 5G-GUTI.

In the correspondence table 102, one DCN-ID is associated with one or more S-NSSAIs. In the 5G mobile communication network, each of a plurality of S-NSSAIs corresponds to an APN, and the UE can simultaneously establish a connection with a plurality of APNs using a plurality of S-NSSAIs.

The S-NSSAI is information specifying a slice that can be used in the 5G mobile communication network. The NSSAI can be indicated by a set of a plurality of S-NSSAIs. Examples of each S-NSSAI include a "service type," a "slice type," and a "slice differentiator." The S-NSSAI is configured to include a slice differentiator (SD) and a slice/service type (SST).

The DCN-ID is information specifying a slice that can be used in the 4G mobile communication network. In the present embodiment, the DCN-ID is associated with the NSSAI or the like in advance. In the 5G mobile communication network, it is possible to perform communication with a plurality of slices at the same time by using the NSSAI, but in the 4G mobile communication network, it is possible to perform communication with only one slice using the DCN-ID.

The APN/DNN is information indicating a connection destination, and in the present embodiment, in the 4G mobile communication network, it is synonymous with a slice.

The correspondence table 103 does not associate the S-NSSAI indicating the slice that is unable to be supported by the 4Gmobile communication network with the DCN-ID. For this reason, when the S-NSSAI corresponding to the DCN-ID is read out, the communication control unit 101 can exclude communication control information that is unable to be supported by the 4Gm mobile communication network.

Here, the 5G-GUTI and the EPS-GUTI will be described. Each GUTI is information identifying the UE 10 temporarily. Each GUTI includes the following information.

The 5G-GUTI includes a mobile country code (MCC), a mobile network code (MNC), an area code (an AMF region ID) to which an AMF belongs, a set (an AMF Set ID) to which an AMF in that area belongs, an ID (AMF Pointer) uniquely deciding an AMF, and an ID (TMSI) allocated when the UE 10 performs location registration.

The EPS-GUTI includes a mobile country code (MCC), a mobile network code (MNC), an area code (MMEGI) to which an MME belongs, an ID (MMEC) uniquely deciding an MME, and an ID (TMSI) allocated when the UE 10 performs location registration.

In the EPS-GUTI and the 5G-GUTI, since the same parameters (MCC or the like) are stored in different fields, it is possible to map each other without preliminary information. In other words, it is possible to generate the 5G-GUTI from the EPS-GUTI or generate the EPS-GUTI from the 5G-GUTI.

Since the MME 100a and the AMF 100 share the above parameters, it is possible to uniquely identify the AMF and the MME to which the UE 10 belongs. Therefore, the MME 100a and the AMF 100 generate the 5G-GUTI or the EPS-GUTI identifying the UE 10 using these parameters. A generation policy of the 5G-GUTI and the EPS-GUTI is specified in 3GPP TS 23.501.

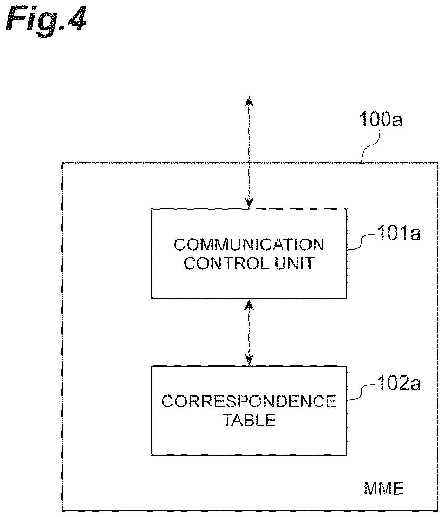

FIG. 4 is a block diagram illustrating a functional configuration of the MME 100a. As illustrated in FIG. 4, the MME 100a includes a communication control unit 101a and a correspondence table 102a. The communication control unit 101a (a search unit, first to third search units, a communication unit, and first to third communication units) and the correspondence table 102a have functions similar to the communication control unit 101 and the correspondence table 102 in the AMF 100, respectively.

### [Correspondence table in each node]

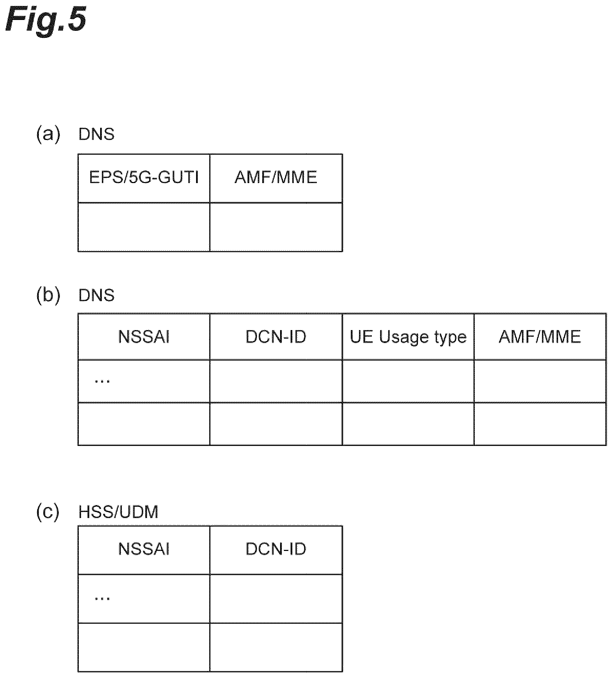

The 4G-RAN 50a or the like than the AMF 100 and the MME 100a have a correspondence table for performing a node selection process and an address resolution. FIG. 5 illustrates specific examples thereof.

FIGS. 5(a) and 5(b) illustrate specific examples of the correspondence table included in the DNS. The DNS includes a correspondence table in which the EPS/5G-GUTI and the AMF/MME address are associated with each other, and performs the address resolution in accordance with an inquiry from the AMF 100 or the MME 100a. Fig. 5(a) illustrates a correspondence table for performing the address resolution using the GUTI as a key, and Fig. 5(b) illustrates a correspondence table for performing the address resolution using the NSSAI or the DCN-ID as a key. Information registered in the DNS illustrated in FIG. 5(a) is appropriately registered or updated while communication control is being performed by the AMF 100/MME 100a. The information illustrated in FIG. 5(b) is registered or updated by a network administrator.

FIG. 5(c) illustrates a specific example of the correspondence table included in an HSS/UDM. The HSS/HDM can search for the DCN-ID using the NSSAI as the key.

### [Switching process of mobile communication network in idle mode]

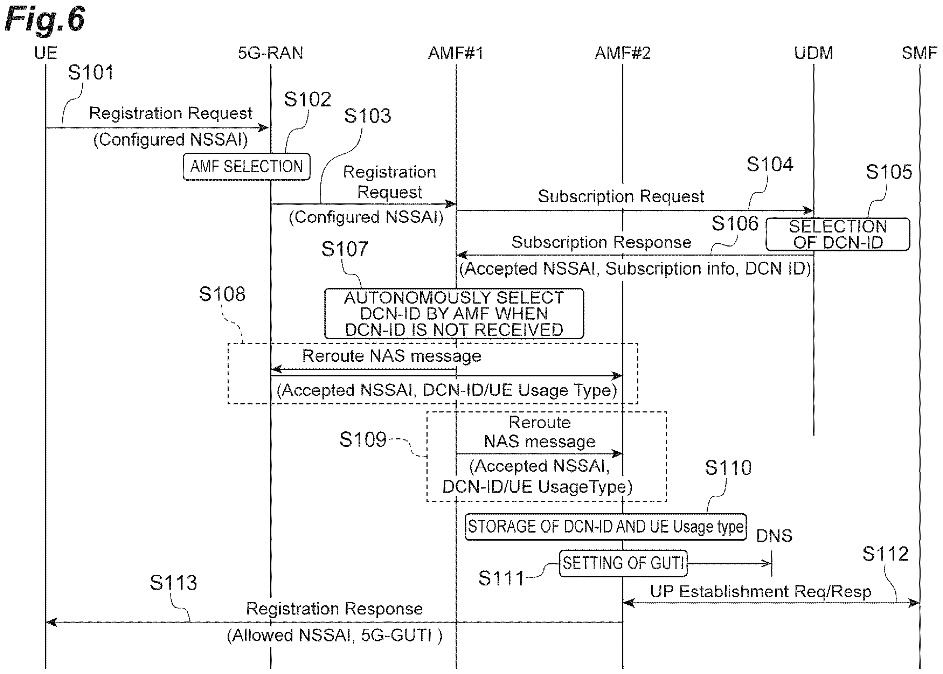

Next, a processing sequence of the communication system of the present embodiment will be described with reference to FIGS. 6 to 8. As a premise in each process, the NSSAI is set in the UE 50.

As described above, the EPS-GUTI and the 5G-GUTI are shared by the UE 10, the 5G-RAN 50, the 4G-RAN 50a, the AMF 100, the MME 100a, the DNS, and the like in accordance with the policy specified in 3GPP. Further, the EPS-GUTI and the 5G-GUTI are associated in the UE 10, the AMF 100, and the MME 100a. Therefore, one UE 10 can be identified in each of the above nodes.

In the AMF 100 and the MME 100a, the correspondence table 102 or the correspondence table 102a stores the 5G-GUTI or the EPS-GUTI, the NSSAI, the DCN-ID, and the UE Usage type in association with each other. Therefore, the AMF 100 and the MME 100a can search for a desired parameter using any one of the associated parameters as a key.

Further, the 4G-RAN 50a and the 5G-RAN 50 can select the AMF 100 and the MME 100a in accordance with the MMEGI and MMEC or the AMFRegion ID, the AMF Set ID, and the AMF pointer constituting the NSSAI, the DCN-ID, or the EPS/5G-GUTI in order to establish a communication connection with a slice corresponding to an instruction from the UE 10. Each of the 4G-RAN 50a and the 5G-RAN 50 includes a table in which some (the MMEGI or the like) of the parameters constituting the GUTI are associated with the AMF or the MME. Therefore, the 4G-RAN 50a and the 5G-RAN 50 can select a designated AMF 100 or the MME 100a in accordance with the communication connection process from the UE 10.

FIG. 6 is a diagram illustrating a processing sequence when location registration to the 5G-RAN 50 is performed. The location registration is a general process.

In the UE 10, an S-NSSAI 1-1 and an S-NSSAI 1-1 are set as the NSSAI. Then, the UE 10 transmits a Registration Request including the set NSSAI to the 5G-RAN 50 and performs a location registration process (S101).

Next, the 5G-RAN 50 selects an AMF #1 (S102). This AMF #1 is one AMF among a plurality of AMFs 100, and is a preset Default AMF. Hereinafter, to distinguish several AMFs 100 for the sake of convenience, they are referred to as an AMF #1 and an AMF #2. The 5G-RAN 50 selects the AMF #1 and transmits the set NSSAI (S103).

The AMF #1 transmits a Subscription Request including the NSSAI to the UDM 600 and performs a selection request of the DCN-ID based on the NSSAI (SI04). The UDM 600 includes the correspondence table between the NSSAI and the DCN-ID and can distribute the correspondence table.

The UDM 600 selects the DCN-ID on the basis of the NSSAI (S105), and transmits a Subscription Response to the AMF #1 as a response (S106). The SubscriptionResponse includes an Accepted NSSAI, Subscriptioninfo, and a DCN-ID.

Upon receiving the DCN-ID, the AMF #1 performs a route setting process of causing the AMF allocated to the slice corresponding to the DCN-ID to the communication process. When the AMF #1 fails to receive the DCN-ID from the UDM 600, the AMF #1 sets a previously set DCN-ID and performs the route setting process using the set DCN-ID.

In the present embodiment, the AMF #1 transmits a Reroute NAS message to the 5G-RAN 50, and the 5G-RAN 50 further transmits a Reroute NAS message to the AMF #2 connectable to the slice corresponding to the DCN-ID (SI08). The Reroute NAS message includes the Accepted NSSAI, the DCN-ID, the UE Usage Type which are received. Further, the AMF #1 may transmit the Reroute NAS message to the AMF #2 without going through the 5G-RAN 50 (SI09). The process of any one of step S108 and S109 is performed.

The AMF #2 stores the received NSSAI, the DCN-ID, and the UE Usage Type (S110). The AMF #2 performs a setting of the globally unique temporary UE identity (5G-GUTI) and the EPS-GUTI. The 5G-GUTI is a temporary ID for uniquely recognizing the UE 10 in the 5G mobile communication network, and the EPS-GUTI is a temporary ID for uniquely recognizing the UE 10 in the 4G mobile communication network. The AMF #2 registers the set GUTI in the DNS in association with the DCN-ID, the UE Usage type, and the address of the AMF #2 (S111). The DNS stores the EPS/5G-GUTI in association with the DCN-ID or the like.

The AMF #2 establishes a communication route with the SMF 400 and the UPF 300 in order to perform communication with the UE 10 (S112). The AMF #2 transmits a Registration Response which is a response to the location registration to the UE 10 (S113). The Registration Response includes the NSSAI (Allowed NSSAI) indicating the connected slice and the set 5G-GUTI.

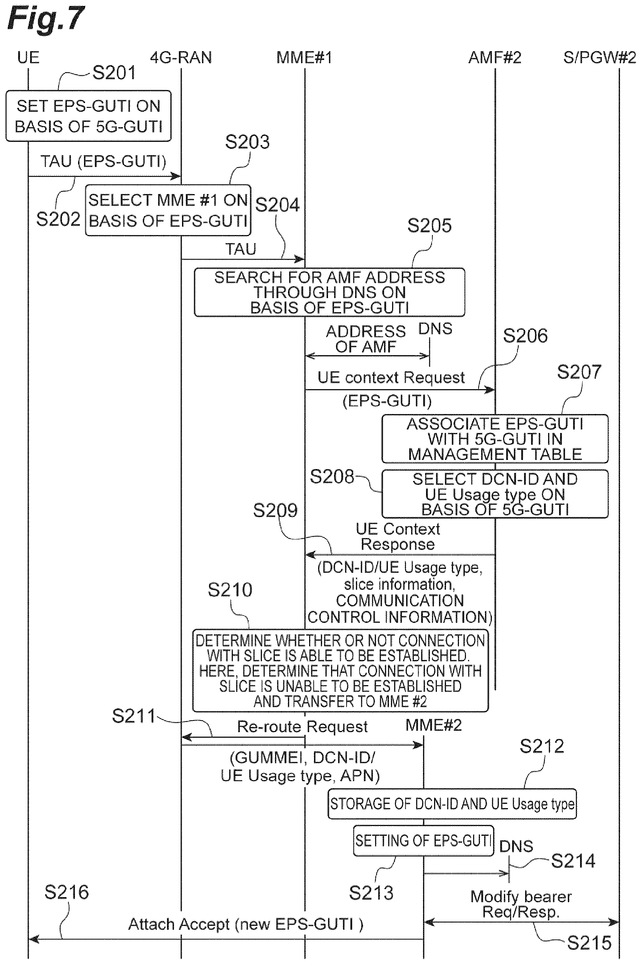

Next, a seamless switching process when the UE 10 moves from 5G mobile communication network to the 4G mobile communication network will be described. FIG. 7 is a sequence diagram illustrating the process.

The UE 10 sets the EPS-GUTI on the basis of the 5G-GUTI (FIG. 6: S111) generated in the 5G mobile communication network (S201). The setting of the EPS-GUTI is specified in 3GPPTS 23.501 as described above. When the UE 10 moves from the 5G mobile communication network to the 4G mobile communication network, the UE 10 transmits a TAU signal including the EPS-GUTI and performs the process for the location registration (S202). The 4G-RAN 50a selects the MME 100a on the basis of the EPS-GUTI (S203).

As described above, the 4G-RAN 50a can select the MME corresponding to the EPS-GUTI. More specifically, as described above, the EPS-GUTI includes the parameters such as the MMEGI and the MMEC. These parameters are parameters shared by the respective nodes. The 4G-RAN 50a can select the MME 100a associated with the parameters. Here, the 4G-RAN 50a selects the MME #1 and transmits the TAU signal (including the EPS-GUTI) to the MME #1 (S204).

The MME #1 searches for an AMF address by performing a DNS search using the EPS-GUTI as a key (S205). The DNS includes a table in which the EPS-GUTI and the address of the AMF are associated with each other and can search for the corresponding AMF address in accordance with the search request from the MME #1.

Here, the MME #1 searches for the AMF #2. Then, the MME #1 transmits a UE Context Request including the EPS-GUTI and the DCN-ID to the AMF #2 (S206).

The AMF #2 includes a correspondence table 102 in which the 5G-GUTI, the NSSAI, the DCN-ID, the UE Usage Type, and the communication control information are associated. The AMF #2 further stores the EPS-GUTI in association with this correspondence table 102 (S207). In this case, the AMF #2 stores the EPS-GUTI and the 5G-GUTI in association with each other using the UE Usage Type or the DCN-ID as a key.

The AMF #2 selects the DCN-ID, the UE Usage Type, and the connection destination information corresponding to the 5G-GUTI (S208). The AMF #2 transmits the UE Context Response including the connection destination information or the like to the MME #1 (S209). Further, the UEContext Response may include other information such as information related to a slice as an option.

Depending on the NSSAI (the APN or the like), The AMF #2 manages that a communication connection with a slice is unable to be established via the 4G mobile communication network together. The AMF #2 includes the correspondence table 102, and manages a plurality of NSSAIs for one DCN-ID. For each NSSAI, it is managed whether or not it is possible to support the 4G mobile communication network. On the basis of the corresponding DCN-ID, the AMF #2 can determine the communication control information or the like used for the slice which is unable to be supported in the 4G mobile communication network and omit transmission thereof.

On the basis of the DCN-ID, the MME #1 determines whether or not it is a slice which is accessible by itself (S210).

The MME #1 detects the slice (the DCN-ID) which it can support, and stores information therefore. Here, the MME #1 determines that the communication connection with the slice specified by the DCN-ID is unable to be established. Then, the MME #1 transmits a route change request to the 4G-RAN 50a, and the 4G-RAN 50a selects the MME #2 corresponding to the DNC-ID in accordance with the correspondence table. The MME #1 transmits the DCN-ID, the UE Usage type, and the like to the selected MME #2 (S211). The MME #2 stores the DCN-ID, the UE Usage Type, and the like (S212). The MME #2 sets a new EPS-GUTI (S213) and registers it in the DNS together with the address of the MME #2 (S214). The DNS stores the EPS-GUTI and the address of the MME #2 in association with each other.

Then, in order to perform the route switching process, the MME #2 transmits a Modify bearer Request and receives a Response (S215). The MME #2 transmits an Attach Accept including the DCN-ID and the set new EPS-GUTI to the UE 10, and notifies of the completion of the location registration (S216).

Accordingly, the MME 100a can search for the AMF 100 and seamlessly switch the communication connection between the 4G mobile communication network and the 5G mobile communication network. In step S210, when the MME #1 can establish a connection with the slice, the MME #1 performs the switching process and the like, and performs the process corresponding to steps S212, S213, and S215.

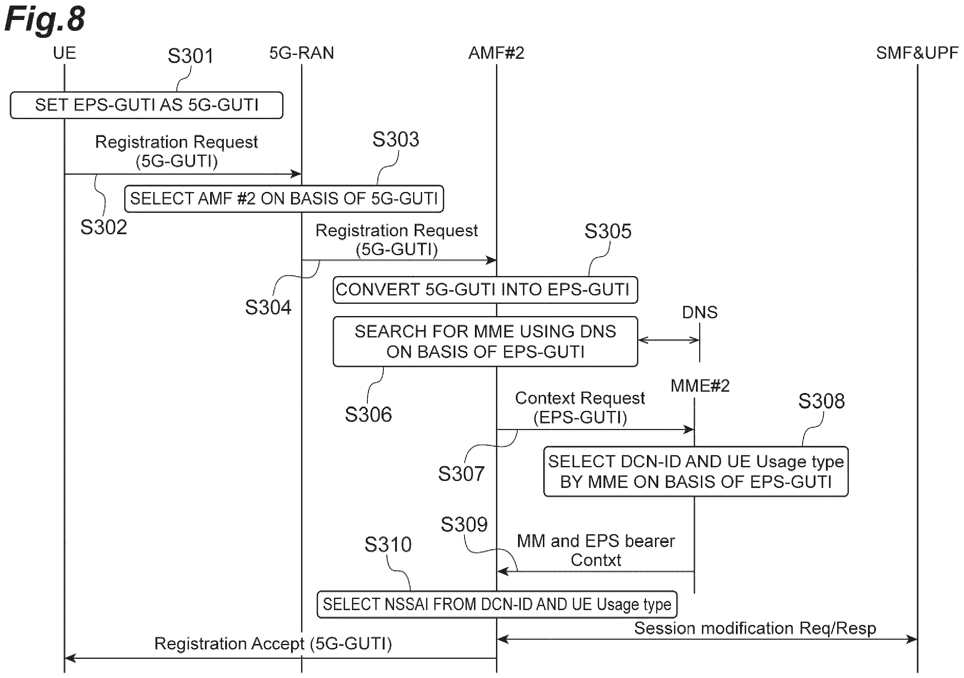

Next, the process when the UE 10 moves from the 4G mobile communication network to the 5G mobile communication network again will be described. FIG. 8 is a sequence diagram illustrating the process thereof.

If the UE 10 moves from the 4G mobile communication network to the 5G mobile communication network, the UE 10 sets the EPS-GUTI set in S213 of FIG. 7 in association with the new 5G-GUTI (S301).

The UE 10 transmits a Registration Request including the newly set 5G-GUTI to the 5G-RAN 50 and performs the location registration process in the 5G mobile communication network (S302).

The 5G-RAN 50 selects the AMF #2 using the 5G-GUTI (S303) and transmits a Registration Request including the 5G-GUTI to the AMF #2 (S304). The 5G-GUTI includes the parameters such as the AMF Region ID, the AMF set ID, and the AMF Pointer. These parameters are parameters shared by the respective nodes. The 5G-RAN 50 can select the AMF 100 associated with the parameters.

The AMF #2 converts the 5G-GUTI into the EPS-GUTI (S305). Since the AMF 100 shares the parameters constituting the GUTI, the AMF 100 can acquire the EPS-GUTI on the basis of the 5G-GUTI. Further, when the 5G-GUTI is stored in the DNS, in S305, the address resolution by the DNS may be performed using the 5G-GUTI as a key without converting the 5G-GUTI. In the present embodiment, the DNS stores the 5G-GUTI, the EPS-GUTI, and the addresses of the MME in association with each other, but the address resolution may be performed using the EPS-GUTI as a key as described above.

The AMF #2 searches for the MME #2 by searching for the DNS using the converted EPS-GUTI (S306). In the DNS, the EPS-GUTI set in the UE 40 in steps S213 and S214 of FIG. 7 is registered. Therefore, the MME #2 can be searched for using it.

The AMF #2 transmits a Context Request including the EPS-GUTI to the MME #2 (S307).

The MME #2 includes a table storing the EPS-GUTI, the DCN-ID, the UE Usage Type, and the connection destination information. Then, the MME #2 selects the DCN-ID or the like on the basis of the EPS-GUTI (S308). The MME #2 transmits a Context Response including an MM and EPS bearer Context to the AMF #2 (S309). The MM and EPS bearer Context includes the connection destination information, the DCN-ID, the UE Usage type, and the like.

The AMF #2 selects the NSSAI on the basis of the DCN-ID and the UE Usage Type. In this case, other communication control information may be used (S310). Thereafter, a Session Modification Req is transmitted, and session switching is performed seamlessly. The AMF #2 transmits the 5G-GUTI and the NSS AI to the UE 10.

Accordingly, even when the UE 10 returns from the 4G mobile communication network to the 5G mobile communication network again, it is possible to take over the communication control information from the MME #2. Therefore, the seamless switching can be realized.

### [Switching process in connected mode]

Next, a process when switching between the 4G mobile communication network and the 5G mobile communication network is performed without moving of the UE 10 will be described. A switching process in a so-called connected mode will be described. The connected mode indicates switching in a case in which the 4Gmobile communication network and the 5G mobile communication network cover the same area.

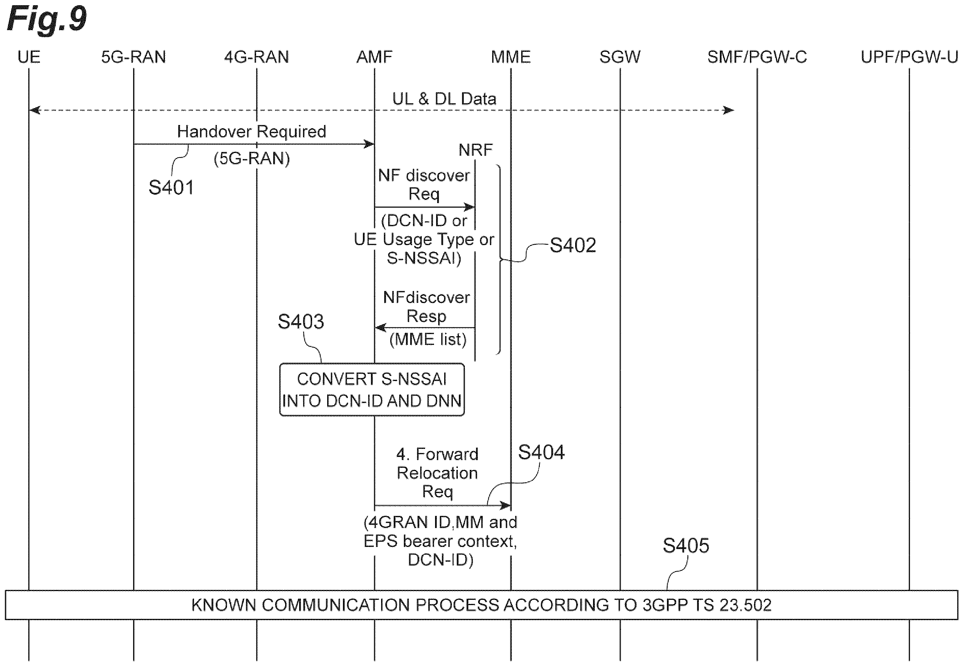

FIG. 9 is a sequence diagram illustrating the switching process of the communication system when switching from the 5G mobile communication network to the 4G mobile communication network is performed in the connected mode.

The 5G-RAN 50 transmits a handover request (Handover Required) to the AMF 100 on the basis of a predetermined condition (S401). The predetermined condition is, for example, a condition that, when the load of the 5G mobile communication network is large, and it is desired to switch the network, the service requirements are loose, and there is no need to use the 5G mobile communication network.

Upon receiving the handover request, the AMF 100 transmits a network function (NF) discover Request to a network repository function (NRF) (S401). The NF Discover Request includes the DCN-ID, the UE Usage Type, or the S-NSSAI. Then, the NRF searches for the MME 100a which is the switching destination of the 4G mobile communication network using the information included in the NF Discover Request as a key, and generates a list thereof. The NRF transmits the generated list to the AMF 100 as an MME list (S402). In the NSF, a process of updating a data table for address resolution is periodically performed.

The AMF 100 includes a correspondence table of the S-NSSAI, the DCN-ID, and the data network name (DNN), and extracts the DCN-ID and the DNN corresponding to the S-NSSAI indicating the connected slice (S403). The AMF 100 selects an arbitrary MME 100a from the MME list and transmits the extracted DCN-ID and the DNN to the MME 100a together with the MM and bearer context, the ID of 4G-RAN, and the like (S404).

Thereafter, the MME 100a can continue the communication with the slice from the 4G mobile communication network on the basis of the communication control information such as the DCN-ID taken over from the AMF 100 (S405). This process is a process specified in 3GPP TS 23.502.

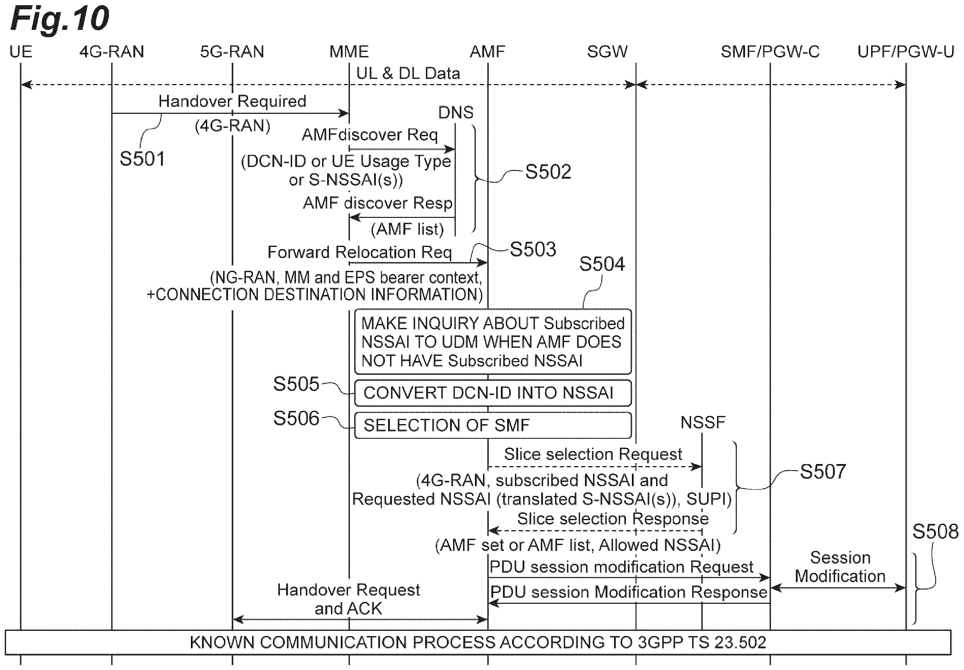

Next, a process when switching from the 4G mobile communication network to the 5G mobile communication network is performed in the connected mode will be described. FIG. 10 is a sequence diagram illustrating a process at that time. As illustrated in FIG. 10, the 4G-RAN 50a transmits the handover request to the MME 100a (S501).

The MME 100a transmits the AMF discover Req to the DNS. The AMF discover Req includes the DCN-ID, the UE Usage Type, or the S-NSSAI. The DNS searches for the AMF 100 which is the switching destination of the 5G mobile communication network using the information included in the AMF discover Req as a key and generates a list indicating one or more AMFs. The DNS transmits the generated list to the MME 100a as an AMF list (S502).

The MME 100a selects an arbitrary AMF 100 from the AMF list and transmits the MM and EPS bearer Context (including the DCN-ID and the connection destination information) (S503). The MM and EPS bearer Context includes the communication control information used for the communication with the 4G mobile communication network.

The AMF 100 performs an inquiry process of a subscribed NSSAI to the UDM 600 if necessary (S504). Here, when the inquiry process of the NSSAI is unable to be performed, the AMF 100 extracts the NSSAI from the DCN-ID on the basis of the correspondence table 102. Further, the AMF 100 includes a table in which the NSSAI and the SMF are associated, and selects the SMF corresponding to the NSSAI on the basis of the table (S506).

The AMF 100 transmits a Slice Selection Request that is a slice selection request to the NSSF, and the NSSF generates an SMF list corresponding to the slice, includes the SMF list in a Slice selection Response together with the NSSAI, and transmits the Slice selection Response (S507).

The AMF 100 transmits a PDU Session Modification Request to the SMF, and session modification is performed between the SMF and the UPF. Thereafter, the SMF transmits a PDU Session Modification Response to the AMF 100, and the AMF 100 transmits the Handover Request and Ack to the 5G-RAN 50. Thereafter, the process specified in 3GPP TS 23.502 is performed, and switching is performed from the 5G mobile communication network to the 4G mobile communication network (S508).

### [AMF selection process]

In the idle mode in FIGS. 6 to 8, the AMF selection process is performed using the GUTI. However, of course, the AMF selection process may be performed using information other than the GUTI.

For example, in S205 of FIG. 7, upon receiving the TAU signal, the MME 100a may select the AMF on the basis of the DCN-ID and the UE Usage Type. In this case, the UE 10 outputs the DCN-ID or the UE Usage type. The MME 100a manages the DCN-ID, the UE Usage Type, and the address of the AMF therein in association with each other in order to select the AMF therein. Further, the MME 100a may acquire the address list of the AMF 100 corresponding to the DCN-ID and the UE Usage Type to the DNS.

Similarly, the MME 100a may select the AMF on the basis of the S-NSSAI. At this time, the UE 10 outputs the NSSAI (including the S-NSSAI). The MME 100a includes a correspondence list in which the DCN-ID and the S-NSSAI are associated, and can select an AMF on the basis of the S-NSSAI.

Further, the MME 100a may acquire the address list of the AMF 100 corresponding to the S-NSSAI for the DNS.

### [MME selection process]

In the idle mode in FIGS. 6 to 8, the MME selection process is performed using the GUTI. However, of course, the MME selection process may be performed using information other than the GUTI.

For example, in S306 of FIG. 8, upon receiving the Registration Request, the AMF 100 may select the MME on the basis of the DCN-ID and the UE Usage Type. The AMF 100 manages the DCN-ID, the UE Usage Type, and the address of the AMF therein in association with each other so as to select the MME therein. Further, the AMF 100 may acquire the address list of the MME 100a corresponding to the DCN-ID and the UE Usage Type for the DNS.

Similarly, the AMF 100 may select the MME on the basis of the S-NSSAI. The AMF 100 includes a correspondence list in which the DCN-ID and the S-NSSAI are associated with each other, and can select the MME on the basis of the S-NSSAI.

Further, the AMF 100 may acquire the address list of the MME 100a corresponding to the DCN-ID for the NRF.

### [Other use cases]

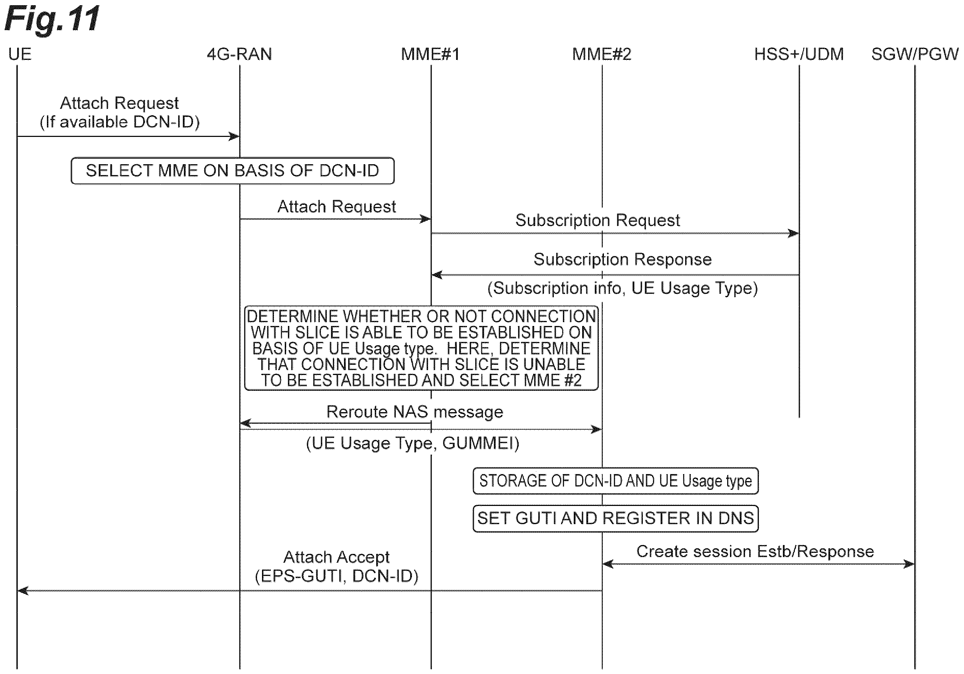

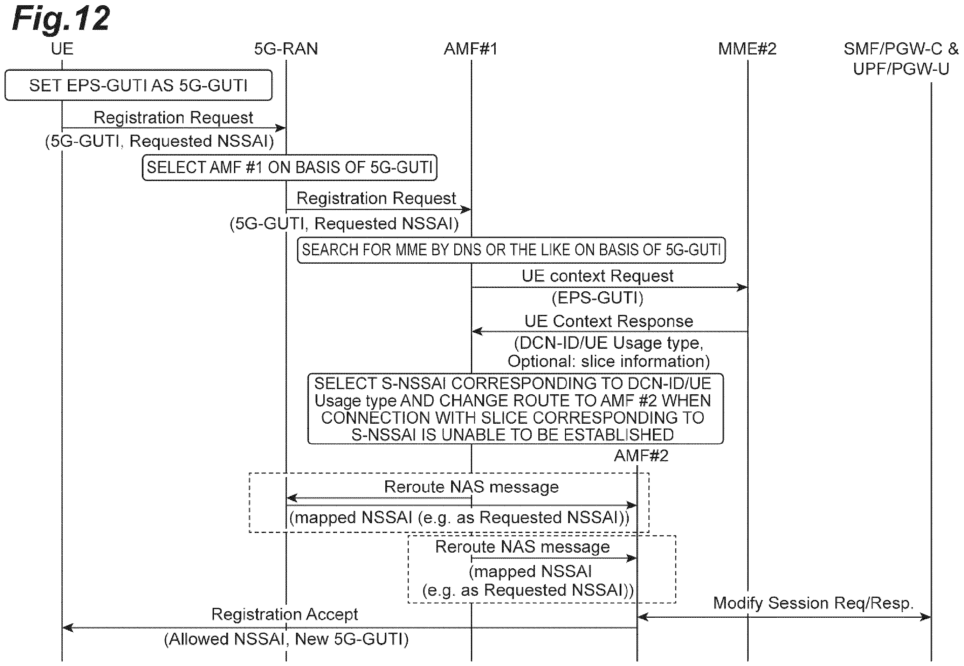

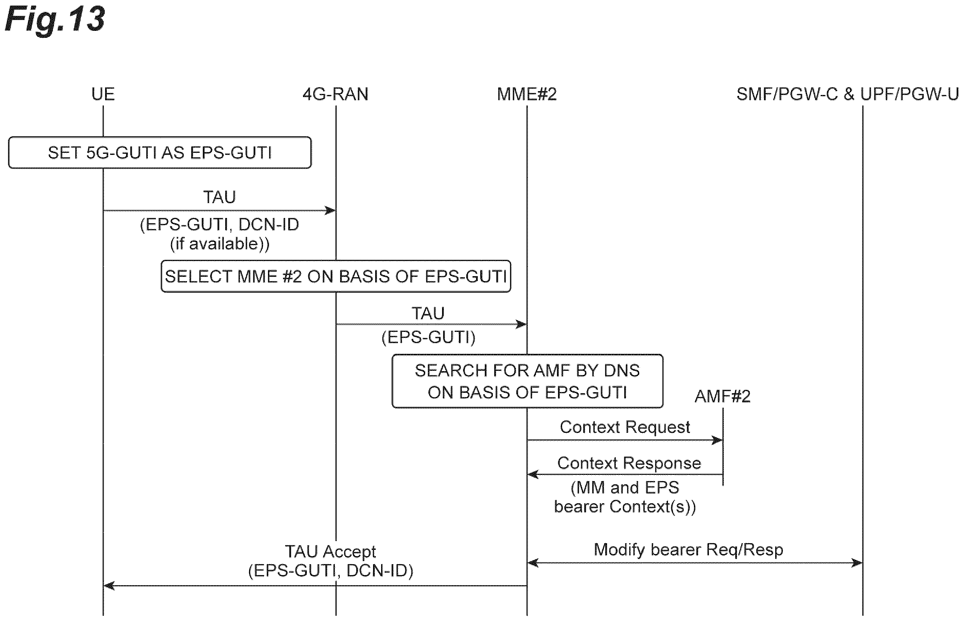

In FIGS. 5 to 7, the search process of the AMF and the MME when it moves from the 5G mobile communication network to the 4G mobile communication network and then returns to the 5G mobile communication network has been described. In addition, a case in which it moves from the 4G mobile communication network to the 5G mobile communication network and then returns to the 4G mobile communication network can be assumed. FIGS. 11 to 13 are sequence diagrams illustrating a process at that time. FIG. 11 is a sequence diagram when the location registration to the 4G mobile communication network is performed. FIG. 12 is a sequence diagram when it moves from the 4G mobile communication network to the 5G mobile communication network. FIG. 13 is a sequence diagram when it returns to the 4G mobile communication network.

As illustrated in FIG. 11, the 4G-RAN 50a selects the MME #1 on the basis of the DCN-ID, and the MME #1 changes the route to the MME #2 because a connection with the slice designated the DCN-ID is unable to be established. The MME #2 performs the setting of the 5G-GUTI and the EPS-GUTI, and registers the set EPS/5G-GUTI in the DNS. The MME #2 performs the communication connection control for the slice (SGW/PGW), and transmits only the EPS-GUTI to UE 10.

In FIG. 12, the 5G-RAN 50 selects the AMF #1 on the basis of the 5G-GUTI, and the AMF #1 converts the 5G-GUTI into the EPS-GUTI and searches for the MME #2 by performing the DNS search using it. Further, when the DNS is associated with the 5G-GUTI, the address resolution using the 5G-GUTI may be performed.

The AMF #1 takes overs the DCN-ID and other communication control information from the MME #2. The AMF #1 determines whether or not the slice connection is able to be established, and if not, the AMF #1 causes an AMF (the AMF #2 in FIG. 12) which manages the slice to take over the communication control information. The AMF #1 or the AMF #2 that has taken over the communication control information newly generates the EPS/5G-GUTI, performs the DNS registration, and transmits it to the UE 10. Here, only the 5G-GUTI is transmitted.

In FIG. 13, the 4G-RAN 50a selects the MME #2 on the basis of the EPS-GUTI. The MME #2 performs the DNS search using the EPS-GUTI and searches for the AMF #2. In addition to the MM and EPS bearer Context, the MME #2 takes over the DCN-ID and the communication control information, and the communication is continued.

### [Operational effects of the present embodiment]

Next, the operational effects of the communication system of the present embodiment will be described. The communication system of the present system performs the communication control for the slice which is a virtual network accessible by the mobile terminal from any of a plurality of mobile communication networks with different communication schemes. For example, the communication control is performed so that the UE 10 accesses the same slice via the 4G mobile communication network and the 5G mobile communication network.

In this communication system, the communication control device which performs the communication connection control for the slice is arranged in each of a plurality of mobile communication networks. The MME 100a is arranged in the 4Gmobile communication network, and the AMF 100 is arranged in the 5G mobile communication network.

In any one of the AMF 100 and the MME 100a, the communication control unit 101 (or the communication control unit 101 a) functions as a search unit (or a first search unit), and if an instruction to switch the mobile communication network with which the UE 10 has a communication connection is received, another communication control device arranged in another mobile communication network is searched for. For example, in the MME 100a, the communication control unit 101a searches for the AMF 100 when the UE 10 moves from the 5G mobile communication network to the 4G mobile communication network. The search may be a search by the DNS or may be any other search.

Further, the communication control unit 101a functions as a communication unit (or a first communication unit) and takes over the communication control information for the communication connection control with another communication control device. For example, when UE 10 moves from the 5G mobile communication network to the 4G mobile communication network, the MME 100a acquires the communication control information from the AMF 100. The communication control information includes information such as the DNC-ID and the connection destination information.

Accordingly, even when the UE 10 switches the mobile communication network and moves, the UE 10 can switch the mobile communication network seamlessly within the core network. Therefore, the slice connection can be continued smoothly.

The above process is the process when the UE 10 moves from the 5G mobile communication network to the 4G mobile communication network, but similar operational effects can be obtained even when the UE 10 moves from the 4G mobile communication network to the 5G mobile communication network. The 4G mobile communication network and the 5G mobile communication network are the fifth generation mobile communication system and the fourth generation mobile communication system, respectively, and employ different communication schemes.

For example, in the AMF 100, the communication control unit 101 searches for the MME 100a which is another communication control device arranged in the 4G mobile communication network. Then, the AMF 100 acquires the communication control information from the MME 100a.

In the communication system of the present embodiment, if the AMF 100 which is the second communication control device receives an instruction to switch the mobile communication network based on movement of the UE 10 from the 4G mobile communication network that is a first mobile communication network to the 5G mobile communication network that is a second mobile communication network while the UE 10 has a communication connection with a slice, the communication control unit 101 (corresponding to a second search unit) searches for the MME 100a that was performing the slice communication control via the 4G mobile communication network.

The communication control unit 101 functions as a second communication unit and acquires information from the MME 100a for establishing a communication connection with a slice via the 5G mobile communication network.

Accordingly, even when it returns again, smooth switching can be performed. Further, when a first communication control device is the AMF 100, a second communication control device is the MME 100a and performs the process corresponding to the above example.

In the communication system of the present embodiment, if the communication control unit 101a in the MME 100a acquires the communication control information (the DCN-ID, the connection destination information, and the like) for establishing a communication connection from the AMF 100, the MME 100a (the MME #1) establishes the communication connection with the slice or causes the MME 100 (the MME #2) that is the first communication control device to establish the communication connection with the slice on the basis of the communication control information.

The MME #1 or the MME #2 generates the EPS-GUTI which is terminal identification information in the 4G mobile communication network in association with the mobile terminal when switching to the 4G mobile communication network is performed in accordance with the switching instruction. The EPS-GUTI is managed to be shared by the MME #1, the MME #2, and the AMF. For example, it is stored and managed in the DNS.

The communication control unit 101 in the AMF 100 searches for the MME #1 or the MME #2 on the basis of the EPS-GUTI terminal identification information managed in a sharable manner (for example, the DNS).

Similarly, the 5G-GUTI is managed to be shareable in the DNS or the NRF and can be used for the search for the AMF 100.

Accordingly, when the UE 10 returns to the 5G mobile communication network again, the AMF 100 can search for the MME 100a that was performing the communication connection control immediately before. Therefore, the seamless switching process can be performed. In the MME 100a, similarly, when the UE 10 returns to the 4G mobile communication network again, it is possible to search for the AMF 100 which was performing the communication control immediately before.

Further, in the MME 100a of the communication system of the present embodiment, when the communication control for a plurality of slices (such as S-NSSAI1, S-NSSAI2, or the like) is performed in the 5G mobile communication network, the communication control unit 101a acquires information obtained by excluding the information (the communication control information or the like) related to the slice that is unable to be supported by the 4G mobile communication network as the information for establishing the communication connection with the slice.

Accordingly, unnecessary information is not transmitted, and the load of the communication process can be reduced.

Further, in the communication system of the present embodiment, if the instruction to switch the mobile communication network generated not on the basis of the movement of the UE 10 between the 4G mobile communication network and the 5G mobile communication network while the UE 10 has the communication connection with the slice as in the connected mode is received, the AMF 100 searches for the MME 100a that performs the slice communication control via the 4Gm mobile communication network. The communication control unit 101 functions as a third search unit.

Then, the communication control unit 101 functions as a third communication unit and transmits the information for establishing the communication connection with the slice to the MME 100a via the 4G mobile communication network.

Accordingly, the seamless switching process can be realized. There are opposite cases, and when it switches from the 5G mobile communication network to the 4G mobile communication network, the MME 100a searches for the AMF 100 that performs the slice communication control via the 5G mobile communication network. In this case, the communication control unit 101a functions as a third search unit. The communication control unit 101a transmits the information for establishing the communication connection with the slice to the AMF 100 via the 5G mobile communication network.

Even in connected mode, when the communication control for a plurality of slices is performed in the 5G mobile communication network, the information obtained by excluding the information related to the slice that is unable to be supported by the 4G mobile communication network among a plurality of slices can be transmitted as the information for establishing the communication connection with the slice.

### [Hardware Configuration]

The block diagrams used in the description of the above embodiment illustrates blocks of functional units. The functional blocks (configuring units) are implemented by an arbitrary combination of hardware and/or software. A device of implementing each functional block is not particularly limited. In other words, each functional block may be implemented by one device which is physically and/or logically combined or may be implemented by a plurality of devices, that is, two or more devices which are physically and/or logically separated and are directly and/or indirectly connected (for example, a wired and/or wireless manner).

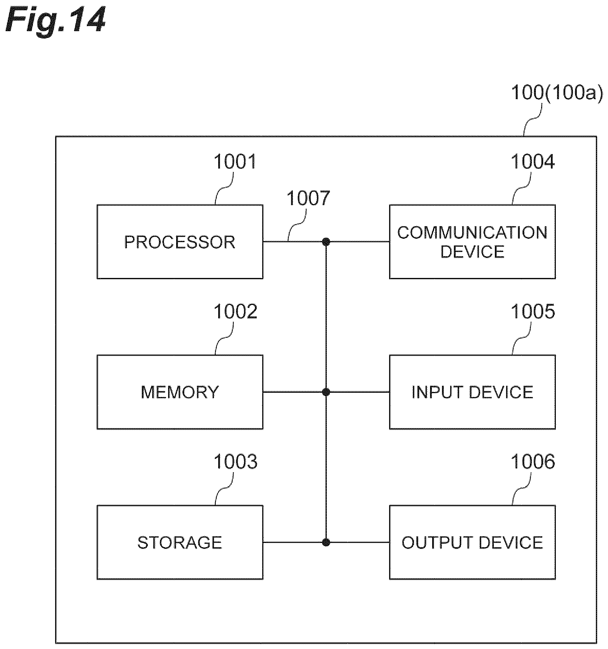

For example, the AMF 100, the MME 100a, or the like in one embodiment of the present invention may function as a computer that performs the process of the present embodiment. FIG. 14 is a diagram illustrating an example of a hardware configuration of each of the AMF 100 and the MME 100a according to the present embodiment. Each of the AMF 100 and the MME 100a may be physically configured as a computer device including a processor 1001, a memory 1002, a storage 1003, a communication device 1004, an input device 1005, an output device 1006, a bus 1007, and the like.

In the following description, the term "device" can be read as a circuit, a device, a unit, or the like. The hardware configuration of each of the AMF100 and the MME100a may be configured to include one or more devices illustrated in the drawing or may be configured without including some devices.

Each function in the AMF100 and the MME100a is implemented such that predetermined software (program) is read on hardware such as the processor 1001 and/or the memory 1002, and the processor 1001 performs an operation and controls communication by the communication device 1004 and reading and/or writing of data in the memory 1002 and the storage 1003.

For example, the processor 1001 operates an operating system and controls the entire computer. The processor 1001 may be configured with a central processing unit (CPU) including an interface with a peripheral device, a control device, an operation device, a register, and the like. For example, each functional unit of the communication control unit 101 (101a) or the like may be realized to include the processor 1001.

Further, the processor 1001 reads a program (a program code), a software module, or data from the storage 1003 and/or the communication device 1004 out to the memory 1002, and performs various types of processes according to them. A program causing a computer to execute at least some of the operations described in the above embodiment is used as the program. For example, some functions of the communication control unit 101 may be implemented by a control program which is stored in the memory 1002 and operates on the processor 1001, or the other functional blocks may be similarly implemented. Various kinds of processes have been described as being performed by one processor 1001 but may be performed simultaneously or sequentially by two or more processors 1001. The processor 1001 may be implemented by one or more chips. The program may be transmitted from a network via an electric communication line.

The memory 1002 is a computer readable recording medium and configured with at least one of a read only memory (ROM), an erasable programmable ROM (EPROM), an electrically erasable programmable ROM (EEPROM), a random access memory (RAM), and the like. The memory 1002 is also referred to as a "register," a "cache," a "main memory," or the like. The memory 1002 can store programs (program codes), software modules, or the like which are executable for carrying out the wireless communication method according to an embodiment of the present embodiment.

The storage 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The storage 1003 is also referred to as an "auxiliary storage device." The storage medium may be, for example, a database, a server, or any other appropriate medium including the memory 1002 and/or the storage 1003.

The communication device 1004 is hardware (a transceiving device) for performing communication between computers via a wired and/or wireless network and is also referred to as a "network device," a "network controller," a "network card," a "communication module," or the like. For example, the functional units of the communication control unit 101 may be realized by the communication device 1004.

The input device 1005 is an input device (for example, a keyboard, a mouse, a microphone, a switch, a button, a sensor, or the like) which receives an input from the outside. The output device 1006 is an output device (for example, a display, a speaker, an LED lamp, or the like) which implements an output to the outside. Further, the input device 1005 and the output device 1006 may be configured to be integrated (for example, a touch panel).

The respective devices such as the processor 1001 and the memory 1002 are connected via the bus 1007 to communicate information with each other. The bus 1007 may be configured with a single bus or may be configured with different buses between the devices.

Further, the AMF100 and the MME100a may be configured to include hardware such as a microprocessor, a digital signal processor (DSP), an application specific integrated circuit (ASIC), a programmable logic device (PLD), or a field programmable gate array (FPGA) or all or some of the functional blocks may be implemented by hardware. For example, the processor 1001 may be implemented by at least one of these pieces of hardware.

### [Terminology]

Although the present embodiment has been described in detail above, it will be apparent to those skilled in the art that the present embodiment is not limited to the embodiment described in this specification. The present embodiment can be implemented as revisions and modifications without departing from the spirit and scope of the present invention set forth in claims. Therefore, the description of this specification is for illustrative purposes only and does not have any restrictive meaning to the present embodiment.

A notification of information is not limited to the aspect or embodiment described in this specification and may be given by any other method. For example, the notification of information may be given physical layer signaling (for example, downlink control information (DCI), uplink control information (UCI)), higher layer signaling (for example, radio resource control (RRC) signaling, medium access control (MAC) signaling, broadcast information (master information block (MIB), system information block (SIB))), other signals, or a combination thereof. Further, the RRC signaling may be referred to as an "RRC message" and may be, for example, an RRC connection setup message, an RRC connection reconfiguration message, or the like.

Each aspect and embodiment described in this specification is applicable to Long Term Evolution (LTE), LTE-Advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), and systems using any other appropriate systems and/or next generation systems expanded on the basis of the systems.

The processing procedures, the sequences, the flowcharts, and the like of the respective aspects/embodiments described in this specification may be reversed in order unless there is a contradiction. For example, the method described in this specification presents elements of various steps in an exemplary order and is not limited to a presented specific order.

Information and the like can be output from an upper layer (or a lower layer) to a lower layer (or an upper layer). Information and the like may be input and output via a plurality of network nodes.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

The determination may be performed in accordance with a value (0 or 1) indicated by one bit, may be performed in accordance with a Boolean value (true or false), or may be performed by a comparison of numerical values (for example, a comparison with a value).

Each aspect/embodiment described in this specification may be used alone, may be used in combination, or may be switched in association with execution. Further, a notification of predetermined information (for example, a notification indicating "being X") is not limited to an explicit notification and may be performed by an implicit notification (for example, a notification of predetermined information is not given).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is referred to as software, firmware, middleware, a microcode, a hardware description language, or any other name.

Further, software, commands, and the like may be transmitted and received via a transmission medium. For example, when software is transmitted from a web site, a server, or any other remote source using a wired technology such as a coaxial cable, a fiber optic cable, a twisted pair, or a digital subscriber line (DSL) and/or a wireless technology such as infrared rays, a radio wave, or a microwave, the wired technology and/or the wireless technology are included in a definition of a transmission medium.

Information, signals, and the like described in this specification may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or an arbitrary combination thereof.

The terms described in this specification and/or terms necessary for understanding this specification may be replaced with terms having the same or similar meanings.

The terms "system" and "network" as used in this specification are used interchangeably.

Further, information, parameters, and the like described in this specification may be indicated by absolute values, may be indicated by relative values from predetermined values, or may be indicated by corresponding other information. For example, radio resources may be indicated by an index.

The names used for the above-described parameters should not be interpreted limitedly in any respect. Further, mathematical formulas or the like using the parameters may be different from mathematical formulas explicitly disclosed in this specification. Since various channels (for example, the PUCCH, the PDCCH, and the like) and information elements (for example, the TPC or the like) can be identified by suitable names, the various names allocated to the various channels and the information elements should not be interpreted limitedly in any respect.

The term "determining" used in this specification may include a wide variety of actions. For example, "determining" may include, for example, events in which events such as judging, calculating, computing, processing, deriving, investigating, looking up (for example, looking up in a table, a database, or another data structure), or ascertaining are regarded as "determining." Further, "determining" may include, for example, events in which events such as receiving (for example, receiving information), transmitting (for example, transmitting information), input, output, or accessing (for example, accessing data in a memory) are regarded as "determining." Further, "determining" may include, for example, events in which events such as resolving, selecting, choosing, establishing, or comparing are regarded as "determining." In other words, "determining" may include events in which a certain operation is regarded as "determining."

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. When used in this specification, two elements may be considered to be "connected" or "coupled" with each other using one or more electric wires, cables and/or a printed electrical connection or using electromagnetic energy such as electromagnetic energy having a wavelength in a radio frequency domain, a microwave region, or a light (both visible and invisible) region as non-limiting and non-exhaustive examples.

A phrase "on the basis of" used in this specification is not limited to "on the basis of only" unless otherwise stated. In other words, a phrase "on the basis of" means both "on the basis of only" and "on the basis of at least."

In a case in which designations such as "first," "second," and the like are used in this specification, any reference to elements thereof does not generally restrict quantities or an order of those elements. Such designations can be used in this specification as a convenient method of distinguishing between two or more elements. Thus, reference to the first and second elements does not mean that only two elements can be adopted there, or first element must precede the second element in a certain form.

"Include," "including," and variations thereof are intended to be comprehensive, similarly to a term "equipped with (comprising)" as long as the terms are used in this specification or claims set forth below. Furthermore, the term "or" used in this specification or claims set forth below is intended not to be an exclusive disjunction.

In this specification, a plurality of devices are also assumed to be included unless it clearly indicates only one device from the context or technically.

In the whole of the present invention, a plurality of things are assumed to be included unless it clearly indicates one thing from the context.

### Reference Signs List

101: communication control unit, 101a: communication control unit, 102: correspondence table, 102a: correspondence table, 100a: MME, 100: AMF.

## Claims

1. A communication system in which communication control is performed for a slice which is a virtual network accessible by a mobile terminal from any of a plurality of mobile communication networks with different communication schemes, the communication system comprising:
a communication control device arranged to perform communication connection control for the slice in each of the plurality of mobile communication networks,
wherein the communication control device arranged in one mobile communication network among the plurality of mobile communication networks comprises:
a search unit that searches for another communication control device arranged in another mobile communication network if an instruction to switch the mobile communication network with which the mobile terminal has a communication connection is received; and
a communication unit that takes over communication control information for the communication connection control with the other communication control device.

2. A communication system in which communication control is performed for a slice which is a virtual network accessible by a mobile terminal from any of a first mobile communication network of a first communication scheme and a second mobile communication network of a second communication scheme, the communication system comprising:
a first communication control device that performs communication control in the first mobile communication network; and
a second communication control device that performs communication control in the second mobile communication network,
wherein the first communication control device comprises:
a first search unit that searches for the second communication control device performing the communication control for the slice via the second mobile communication network if an instruction to switch the mobile communication network based on movement of the mobile terminal from the second mobile communication network to the first mobile communication network is received while the mobile terminal has a communication connection with the slice; and
a first communication unit that acquires connection destination information for establishing the communication connection with the slice via the first mobile communication network from the second communication control device.

3. The communication system according to claim 2, wherein the second communication control device comprises:
a second search unit that searches for the first communication control device performing the communication control for the slice via the first mobile communication network if an instruction to switch the mobile communication network based on movement of the mobile terminal from the first mobile communication network to the second mobile communication network is received while the mobile terminal has a communication connection with the slice; and
a second communication unit that acquires information for establishing the communication connection with the slice via the second mobile communication network from the first communication control device.

4. The communication system according to claim 3, wherein
if the connection destination information for establishing the communication connection is acquired from the second communication control device, the first communication unit in the first communication control device performs an operation of causing the first communication control device to establish the communication connection with the slice or causing another first communication control device to establish the communication connection with the slice on the basis of the connection destination information,
when switching to the first mobile communication network is performed in accordance with the switching instruction, the first communication control device or the other first communication control device allocates terminal identification information in the first mobile communication network to the mobile terminal, and the terminal identification information is managed to be sharable by the first communication control device, the other first communication control device, and the second communication control device, and
the second search unit in the second communication control device searches for the first communication control device or the other first communication control device on the basis of the terminal identification information managed to be sharable.

5. The communication system according to any one of claims 2 to 4, wherein the first search unit searches on the basis of the terminal identification information generated by the mobile terminal in the first mobile communication network.

6. The communication system according to any one of claims 2 to 5, wherein, when communication control is being performed for a plurality of slices in the second mobile communication network, the first communication unit in the first communication control device acquires information obtained by excluding information related to a slice that is unable to be supported by the first mobile communication network among the plurality of slices as the information for establishing the communication connection with the slice.

7. A communication system in which communication control is performed for a slice which is a virtual network accessible by a mobile terminal from any of a first mobile communication network of a first communication scheme and a second mobile communication network of a second communication scheme, the communication system comprising:
a first communication control device that performs communication control in the first mobile communication network; and
a second communication control device that performs communication control in the second mobile communication network,
wherein the second communication control device comprises:
a third search unit that searches for the first communication control device performing the communication control for the slice via the first mobile communication network if an instruction to switch the mobile communication network generated not on the basis of movement of the mobile terminal between the first mobile communication network and the second mobile communication network is received while the mobile terminal has a communication connection with the slice; and
a third communication unit that transmits information for establishing the communication connection with the slice via the first mobile communication network from the first communication control device.

8. The communication system according to claim 7, wherein, when communication control is performed for a plurality of slices in the second mobile communication network, the third communication unit in the first communication control device transmits information obtained by excluding information related to a slice that is unable to be supported by the first mobile communication network among the plurality of slices as the information for establishing the communication connection with the slice.

9. A first communication control device that performs communication control in a first mobile communication network of a first communication scheme in a communication system in which communication control is performed for a slice which is a virtual network accessible by a mobile terminal from any of the first mobile communication network and a second mobile communication network of a second communication scheme, the first communication control device comprising:
a first search unit that searches for the second communication control device performing the communication control for the slice via the second mobile communication network if an instruction to switch the mobile communication network based on movement of the mobile terminal from the second mobile communication network to the first mobile communication network is received while the mobile terminal has a communication connection with the slice; and
a first communication unit that acquires information for establishing the communication connection with the slice via the first mobile communication network from the second communication control device.

10. A second communication control device that performs communication control in a second mobile communication network of a second communication scheme in a communication system in which communication control is performed for a slice which is a virtual network accessible by a mobile terminal from any of a first mobile communication network of a first communication scheme and the second mobile communication network, the second communication control device comprising:
a third search unit that searches for the first communication control device performing the communication control for the slice via the first mobile communication network if an instruction to switch the mobile communication network generated not on the basis of movement of the mobile terminal between the first mobile communication network and the second mobile communication network is received while the mobile terminal has a communication connection with the slice; and
a third communication unit that transmits information for establishing the communication connection with the slice via the first mobile communication network from the first communication control device.

11. A communication method of a communication system in which communication control is performed for a slice which is a virtual network accessible by a mobile terminal from any of a plurality of mobile communication networks with different communication schemes, the communication method comprising:
arranging a communication control device in each of the plurality of mobile communication networks,
wherein the communication control device arranged in one mobile communication network among the plurality of mobile communication networks comprises:
a search step of searching for another communication control device arranged in another mobile communication network if an instruction to switch the mobile communication network with which the mobile terminal has a communication connection is received; and
a communication step of taking over communication control information with the other communication control device.
